# EUROPEAN PATENT APPLICATION

(11) **EP 4 486 013 A1**
(43) Date of publication of application: **01.01.2025**
(21) Application number: 22927690.2
(22) Date of filing: 23.02.2022
(51) Int. Cl.: H04W 52/02, H04W 68/02

(54) **METHOD AND DEVICE FOR MONITORING WAKE-UP SIGNAL, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Gunzelmann, Rainer
(86) International application number: PCT/CN2022/077502
(87) International publication number: WO 2023/159399

(57) **Abstract**

The present invention provides a method and device for monitoring a wake-up signal, and a readable storage medium, applied to the technical field of wireless communications. The method comprises: monitoring a wake-up signal on at least one wake-up signal monitoring occasion in a wake-up signal period. In the present invention, a user equipment monitors the wake-up signal on the at least one wake-up signal monitoring occasion in the wake-up signal period, such that the user equipment accurately receives the wake-up signal, thereby saving energy consumption of the user equipment.

## Description

### TECHNICAL FIELD

The disclosure relates to a field of wireless communication technologies, in particular to a method for monitoring a wake-up signal, an apparatus for monitoring a wake-up signal, and a readable storage medium.

### BACKGROUND

In wireless communication technology, for example, in the 5th Generation (5G) mobile communication technology, in order to reduce the power consumption of a user equipment (UE), a main transceiver of the user equipment can be controlled to go into a sleep state.

A network device may send a wake-up signal, in which it can indicate one or more UEs whether to wake up for downlink monitoring. For example, the wake-up signal includes 16 bits corresponding to 16 UEs, i. e., each bit corresponds to one UE. If a bit value corresponding to a UE is 1 which indicates waking up, the corresponding UE starts its main transceiver for receiving a downlink signal. If a bit value corresponding to the UE is 0 which indicates not waking up, the corresponding UE keeps the main transceiver in the sleep state.

However, if the wake-up signal does not have a grouping function, or the grouping granularity is not fine enough, one wake-up signal may wake up a large number of UEs, which is considered as a false alarm for most of the UEs, and the energy consumption of the UEs that are falsely alarmed may be wasted.

### SUMMARY

The disclosure provides a method for monitoring a wake-up signal, an apparatus for monitoring a wake-up signal, and a readable storage medium.

According to a first aspect, a method for monitoring a wake-up signal is provided. The method is performed by a user equipment, and includes:
monitoring a wake-up signal on at least one wake-up signal monitoring occasion within a wake-up signal cycle.

In this method, the user equipment monitors the wake-up signal on the at least one wake-up signal monitoring occasion within the wake-up signal cycle, so that the user equipment can accurately receive the wake-up signal, saving the energy consumption.

Monitoring the wake-up signal on the at least one wake-up signal monitoring occasion within the wake-up signal cycle includes:
monitoring the wake-up signal on at least one wake-up signal monitoring occasion corresponding to the user equipment within the wake-up signal cycle.

In some possible implementations, the wake-up signal cycle includes one wake-up signal monitoring occasion corresponding to the user equipment.

In some possible implementations, the wake-up signal cycle is configured via a broadcast signal sent by a base station; or,
the wake-up signal cycle is configured via a user equipment-specific signaling sent by a base station; or
the wake-up signal cycle is configured by a core network device.

In some possible implementations, the wake-up signal cycle includes N wake-up signal monitoring occasions, and N is an integer greater than 1.

In some possible implementations, N is specified by a protocol; or,
N is configured by a base station; or,
N is determined by at least one parameter configured by a base station.

In some possible implementations, N is linearly related to a time domain length value corresponding to the wake-up signal cycle.

In some possible implementations, the N wake-up signal monitoring occasions included in the wake-up signal cycle are evenly distributed within the wake-up signal cycle.

In some possible implementations, time domain locations of the N wake-up signal monitoring occasions included in the wake-up signal cycle are configured by a base station.

In some possible implementations, the N wake-up signal monitoring occasions included in the wake-up signal cycle are in a one-to-one correspondence with N first groups, in which different first groups correspond to different user equipments, and each of the first groups includes at least one user equipment; and
monitoring the wake-up signal on the at least one wake-up signal monitoring occasion within the wake-up signal cycle includes:
monitoring the wake-up signal on a wake-up signal monitoring occasion corresponding to a first group to which the user equipment belongs within the wake-up signal cycle.

In some possible implementations, the wake-up signal monitoring occasions are in a one-to-one correspondence with the first groups based on a first relation, in which the first relation is based on identifications of the user equipments, or a first rule configured by a core network device, or paging probabilities of the user equipments.

In some possible implementations, the method further includes:
one wake-up signal monitoring occasion corresponds to at least one wake-up signal resource, and different wake-up signal resources correspond to different second groups; and
monitoring the wake-up signal on the at least one wake-up signal monitoring occasion within the wake-up signal cycle includes:
monitoring the wake-up signal on a first wake-up signal resource on the at least one wake-up signal monitoring occasion within the wake-up signal cycle, in which the first wake-up signal resource is a wake-up signal resource corresponding to a second group to which the user equipment belongs.

In some possible implementations, each second group is a subset of a first group having a one-to-one correspondence with the wake-up signal monitoring occasion, in which different second groups correspond to different user equipments.

In some possible implementations, the method further includes:
determining a second group to which the user equipment belongs based on an identification of the user equipment, a second rule configured by a core network device, or a paging probability of the user equipment.

In some possible implementations, one wake-up signal resource corresponds to at least one wake-up signal parameter, different wake-up signal parameters correspond to different third groups, and each third group is a subset of a second group having a one-to-one correspondence with the wake-up signal resource;
monitoring the wake-up signal on the at least one wake-up signal monitoring occasion within the wake-up signal cycle includes:
monitoring the wake-up signal on a first wake-up signal resource on the at least one wake-up signal monitoring occasion within the wake-up signal cycle using a first wake-up signal parameter, in which the first wake-up signal resource is a wake-up signal resource corresponding to the second group to which the user equipment belongs, and the first wake-up signal parameter is a wake-up signal parameter corresponding to a third group to which the user equipment belongs.

In some possible implementations, the wake-up signal parameter includes at least one of: a cyclic shift parameter of the wake-up signal, or an initialization parameter in an initialization scrambling sequence corresponding to the wake-up signal.

In some possible implementations, the method further includes:
reporting at least one wake-up signal cycle recommended by the user equipment to a base station.

According a second aspect, a communication device is provided. The communication device may be used to implement the steps performed by the user equipment in the first aspect described above or any possible design of the first aspect. The user equipment may implement each of the functions in the above methods in the form of a hardware structure, a software module, or a combination of the hardware structure and the software module.

If the communication device shown in the first aspect is implemented by a software module, the communication device may include a transceiver module.

The transceiver module is configured to monitor a wake-up signal on at least one wake-up signal monitoring occasion within a wake-up signal cycle.

According to a third aspect, a communication device including a processor and a memory is provided. The memory is configured to store a computer program, and the processor is configured to execute the computer program to implement the first aspect or any possible design of the first aspect.

According to a fourth aspect, a computer-readable storage medium having instructions (also called as computer programs or programs) stored thereon is provided. When the instructions are called and executed by a computer, the computer is caused to implement the first aspect or any possible design of the first aspect.

### BRIEF DESCRIPTION OF THE DRAWINGS

The accompanying drawings illustrated herein are used to provide a further understanding of embodiments of the disclosure and constitute a part of the application, and the schematic embodiments of the disclosure and illustrations thereof are used to explain embodiments of the disclosure and do not constitute an undue limitation of embodiments of the disclosure.

The accompanying drawings, which are incorporated in and constitute a part of this specification, illustrate embodiments consistent with the disclosure and, together with the description, serve to explain principles of embodiments of the disclosure.
FIG. 1 is a schematic diagram illustrating a wireless communication system according to an embodiment of the disclosure.
FIG. 2 is a flowchart of a method for monitoring a wake-up signal according to an exemplary embodiment.
FIG. 3 is a flowchart of a method for monitoring a wake-up signal according to an exemplary embodiment.
FIG. 4 is a flowchart of a method for monitoring a wake-up signal according to an exemplary embodiment.
FIG. 5 is a flowchart of a method for monitoring a wake-up signal according to an exemplary embodiment.
FIG. 6 is a flowchart of a method for monitoring a wake-up signal according to an exemplary embodiment.
FIG. 7 is a flowchart of a method for monitoring a wake-up signal according to an exemplary embodiment.
FIG. 8 is a flowchart of a method for monitoring a wake-up signal according to an exemplary embodiment.
FIG. 9 is a flowchart of a method for monitoring a wake-up signal according to an exemplary embodiment.
FIG. 10 is a structural diagram of an apparatus for monitoring a wake-up signal according to an exemplary embodiment.
FIG. 11 is a structural diagram of a device for monitoring a wake-up signal according to an exemplary embodiment.

### DETAILED DESCRIPTION

Embodiments of the disclosure are further described in combination with the accompanying drawings and specific implementations.

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of apparatuses and methods consistent with aspects related to the disclosure as recited in the appended claims.

The terms used in embodiments of the disclosure are only for the purpose of describing specific embodiments, and are not intended to limit embodiments of the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein may be interpreted as "when", "while" or "in response to determining".

Embodiments of the disclosure are described in detail below, and examples of which are illustrated in the accompanying drawings, in which the same or similar symbols indicate the same or similar elements. Embodiments described below with reference to the accompanying drawings are examples and are intended to be used to explain the disclosure and are not to be construed as limiting the disclosure.

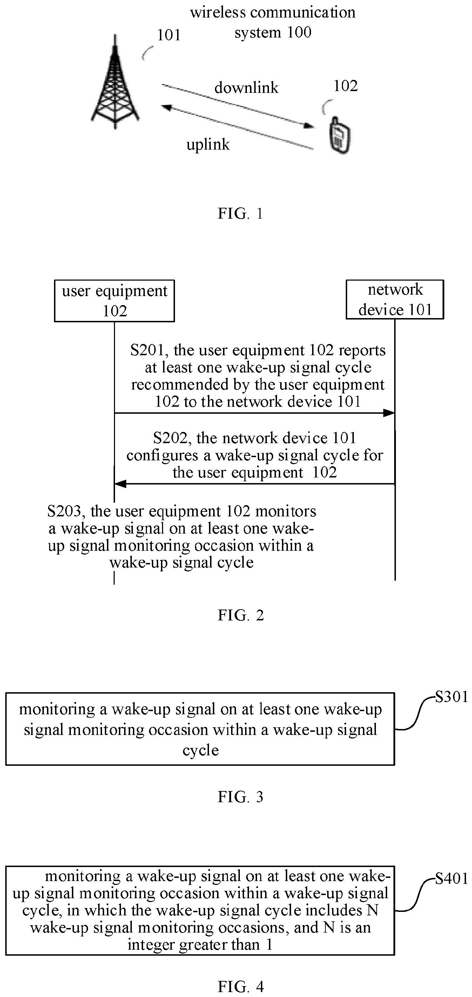

A method for monitoring a wake-up signal provided in embodiments of the disclosure may be applied to a wireless communication system 100 shown in FIG. 1. The wireless communication system 100 may include, but is not limited to, a network device 101 and a user equipment 102. The user equipment 102 is configured to support carrier aggregation. The user equipment 102 can be connected to multiple carrier components of the network device 101. The carrier components includes one primary carrier component and one or more secondary carrier components.

It should be understood that the above wireless communication system 100 can be applied to both low-frequency scenarios and high-frequency scenarios. Application scenarios of the wireless communication system 100 include, but are not limited to, a long term evolution (LTE^{™}) system, an LTE frequency division duplex (FDD) system, an LTE time division duplex (TDD) system, a worldwide interoperability for micro wave access (WiMAX) communication system, a cloud radio access network (CRAN) system, a future 5th-Generation (5G) system, a new radio (NR) communication system or a future evolved public land mobile network (PLMN) system, etc.

The above-described user equipment 102 may be a user equipment (UE), a terminal, an access terminal, a terminal unit, a terminal station, a mobile station (MS), a distant station, a remote terminal, a mobile terminal, a wireless communication device, a terminal agent, or a user device. The UE 102 may have a wireless transceiver function and is capable of communicating (e.g., wirelessly communicating) with one or more network devices 101 in one or more communication systems and accepting network services provided by the network device 101. The network device 101 includes, but is not limited to, a base station shown in the figure.

The UE 102 may be a cellular phone, a cordless phone, a session initiation protocol (SIP) phone, a wireless local loop (WLL) station, a personal digital assistant (PDA), a handheld device having a wireless communication function, a computing device or other processing devices connected to a wireless modem, a vehicle-mounted device, a wearable device, a UE in a future 5G network or a UE in a future evolved PLMN network, etc.

The network device 101 may be an access network device (or an access network site). The access network device refers to a device that provides a network access function, such as a radio access network (RAN) base station. The network device may include a base station (BS), or include a BS device and a radio resource management device for controlling the BS. The network device may also include a relay station (relay device), an access point, a BS in the future 5G network, a BS in a future evolved PLMN network, or a NR BS. The network device may be a wearable device, an in-vehicle device, or a communication chip with a communication module.

For example, the network device 101 includes, but is not limited to, a next generation 5G BS (gNB, which is short for gnodeB), an evolved node B (eNB) in an LTE system, a radio network controller (RNC), a node B (NB) in a wideband code division multiple access (WCDMA) system, a radio controller under a CRAN system, a BS controller (BSC), a base transceiver station (BTS) in a Global Mobile Communication System (GSM) system or a Code Division Multiple Access (CDMA) system, a home BS (HNB, which is short for home evolved node B or home node B), a baseband unit (BBU), a transmitting and receiving point (TRP), a transmitting point (TP), or a mobile switching center.

Embodiments of the disclosure provide a method for monitoring a wake-up signal. FIG. 2 is a flowchart of a method for monitoring a wake-up signal according to an exemplary embodiment. As illustrated in FIG. 2, the method includes the following steps.

At step S201, a UE 102 reports at least one wake-up signal cycle recommended by the UE 102 to a network device 101, the network device receives the at least one wake-up signal cycle recommended by the UE 102.

At step S202, the network device 101 configures a wake-up signal cycle for the UE 102, the UE 102 obtains the wake-up signal cycle configured by the network device 101 for the UE102.

At step S203, the UE 102 monitors a wake-up signal on at least one wake-up signal monitoring occasion within the wake-up signal cycle.

In some possible implementations, the wake-up signal cycle includes M system frames. In an example, M may be 16, 32, 64, 128 or 256.

In some possible implementations, monitoring the wake-up signal on the at least one wake-up signal monitoring occasion within the wake-up signal cycle includes: monitoring the wake-up signal on at least one wake-up signal monitoring occasion corresponding to the UE within the wake-up signal cycle.

In some possible implementations, the wake-up signal cycle includes one wake-up signal monitoring occasion corresponding to the UE. In embodiments of the disclosure, the network device 101 configures the wake-up signal cycle for the UE, and the UE 102 monitors the wake-up signal on the at least one wake-up signal monitoring occasion within the wake-up signal cycle, so that the UE 102 can accurately receive the wake-up signal, saving the energy consumption.

Embodiments of the disclosure provide a method for monitoring a wake-up signal, which is performed by a UE. The method may be executed independently or in combination with any other embodiment of the disclosure. FIG. 3 is a flowchart of a method for monitoring a wake-up signal according to an exemplary embodiment. As illustrated in FIG. 3, the method includes the following steps.

At step S301, a wake-up signal is monitored on at least one wake-up signal monitoring occasion within a wake-up signal cycle.

In some possible implementations, the wake-up signal cycle is configured via a broadcast signal sent by a base station; or,
the wake-up signal cycle is configured via a UE-specific signaling sent by a base station; or
the wake-up signal cycle is configured by a core network device.

In some possible implementations, the wake-up signal cycle includes M system frames. In an example, M may be 16, 32, 64, 128 or 256.

In some possible implementations, monitoring the wake-up signal on the at least one wake-up signal monitoring occasion within the wake-up signal cycle includes: monitoring the wake-up signal on at least one wake-up signal monitoring occasion corresponding to the UE within the wake-up signal cycle.

In some possible implementations, the wake-up signal cycle includes one wake-up signal monitoring occasion corresponding to the UE. In some possible implementations, the wake-up signal cycle includes N wake-up signal monitoring occasions, and N is an integer greater than 1.

In embodiments of the disclosure, the UE monitors the wake-up signal on the at least one wake-up signal monitoring occasion within the wake-up signal cycle, so that the UE can accurately receive the wake-up signal, saving the energy consumption.

Embodiments of the disclosure provide a method for monitoring a wake-up signal, which is performed by a UE. The method may be executed independently or in combination with any other embodiment of the disclosure. FIG. 4 is a flowchart of a method for monitoring a wake-up signal according to an exemplary embodiment. As illustrated in FIG. 4, the method includes the following steps.

At step S401, a wake-up signal is monitored on at least one wake-up signal monitoring occasion within a wake-up signal cycle, in which the wake-up signal cycle includes N wake-up signal monitoring occasions, and N is an integer greater than 1.

In some possible implementations, the wake-up signal cycle is configured via a broadcast signal sent by a base station; or,
the wake-up signal cycle is configured via a UE-specific signaling sent by a base station; or
the wake-up signal cycle is configured by a core network device.

In some possible implementations, the wake-up signal cycle includes M system frames. In an example, M may be 16, 32, 64, 128 or 256.

In some possible implementations, monitoring the wake-up signal on the at least one wake-up signal monitoring occasion within the wake-up signal cycle includes: monitoring the wake-up signal on at least one wake-up signal monitoring occasion corresponding to the UE within the wake-up signal cycle.

In some possible implementations, the wake-up signal cycle includes one wake-up signal monitoring occasion corresponding to the UE.

In some possible implementations, N is specified by a protocol; or,
N is configured by a base station; or,
N is determined by at least one parameter configured by a base station.

In some possible implementations, N is linearly related to a time domain length value corresponding to the wake-up signal cycle.

In an example, the wake-up signal cycle corresponds to 16 system frames, with a corresponding time domain length value of 16, N=0.5*T=8.

In an example, the wake-up signal cycle corresponds to 32 system frames, with a corresponding time domain length value of 32, N=0.25*T=8.

In an example, the wake-up signal cycle corresponds to 32 system frames with a corresponding time domain length value of 32, N=0.5*T=16.

In some possible implementations, the N wake-up signal monitoring occasions included in the wake-up signal cycle are evenly distributed within the wake-up signal cycle. In some implementations, the N wake-up signal monitoring occasions included in the wake-up signal cycle are unevenly distributed within the wake-up signal cycle. In a possible example, time domain locations of the N wake-up signal monitoring occasions specified by a protocol are obtained. In some possible implementations, the time domain locations of the N wake-up signal monitoring occasions included in the wake-up signal cycle are configured by a base station.

In embodiments of the disclosure, the UE monitors the wake-up signal on the at least one wake-up signal monitoring occasion within the wake-up signal cycle, in which the wake-up signal cycle includes N wake-up signal monitoring occasions and N is an integer greater than 1, so that the UE can accurately receive the wake-up signal, saving the energy consumption.

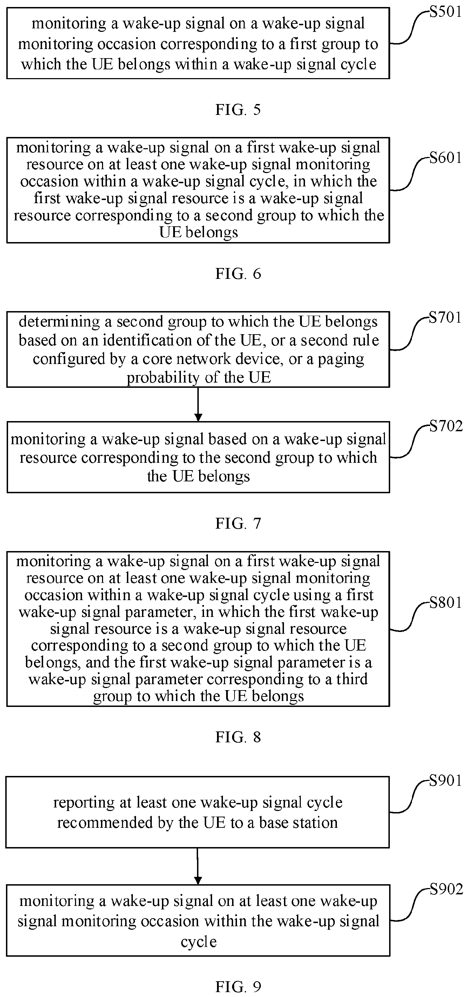

Embodiments of the disclosure provide a method for monitoring a wake-up signal, which is performed by a UE. The method may be executed independently or in combination with any other embodiment of the disclosure. FIG. 5 is a flowchart of a method for monitoring a wake-up signal according to an exemplary embodiment. As illustrated in FIG. 5, the method includes the following steps.

At step S501, a wake-up signal is monitored on a wake-up signal monitoring occasion corresponding to a first group to which the UE belongs within a wake-up signal cycle.

The wake-up signal cycle includes N wake-up signal monitoring occasions, and N is an integer greater than 1. The N wake-up signal monitoring occasions included in the wake-up signal cycle are in a one-to-one correspondence with N first groups, in which different first groups correspond to different UEs, and each of the first groups includes at least one UE.

In some possible implementations, the wake-up signal cycle is configured via a broadcast signal sent by a base station; or,
the wake-up signal cycle is configured via a UE-specific signaling sent by a base station; or
the wake-up signal cycle is configured by a core network device.

In some possible implementations, the wake-up signal cycle includes M system frames. In an example, M may be 16, 32, 64, 128 or 256.

In some possible implementations, monitoring the wake-up signal on the at least one wake-up signal monitoring occasion within the wake-up signal cycle includes: monitoring the wake-up signal on at least one wake-up signal monitoring occasion corresponding to the UE within the wake-up signal cycle.

In some possible implementations, the wake-up signal cycle includes one wake-up signal monitoring occasion corresponding to the UE.

In some possible implementations, N is specified by a protocol; or,
N is configured by a base station; or,
N is determined by at least one parameter configured by a base station.

In some possible implementations, N is linearly related to a time domain length value corresponding to the wake-up signal cycle.

In some possible implementations, the N wake-up signal monitoring occasions included in the wake-up signal cycle are evenly distributed within the wake-up signal cycle. In some implementations, the N wake-up signal monitoring occasions included in the wake-up signal cycle are unevenly distributed within the wake-up signal cycle. In a possible example, time domain locations of the N wake-up signal monitoring occasions specified by a protocol are obtained. In some possible implementations, the time domain locations of the N wake-up signal monitoring occasions included in the wake-up signal cycle are configured by a base station.

In some possible implementations, the time domain locations of the N wake-up signal monitoring occasions included in the wake-up signal cycle are configured by a base station.

In some possible implementations, the wake-up signal monitoring occasions are in a one-to-one correspondence with the first groups based on a first relation, in which the first relation is based on identifications of UEs, a first rule configured by a core network device, or paging probabilities of the UEs.

In embodiments of the disclosure, when the UE monitors the wake-up signal on the corresponding wake-up signal monitoring occasion within the wake-up signal cycle, the UE monitors the wake-up signal on the wake-up signal monitoring occasion corresponding to the first group to which the UE belongs within the wake-up signal cycle, so as to reasonably allocate resources and reduce the energy consumption of the UE.

Embodiments of the disclosure provide a method for monitoring a wake-up signal, which is performed by a UE. The method may be executed independently or in combination with any other embodiment of the disclosure. FIG. 6 is a flowchart of a method for monitoring a wake-up signal according to an exemplary embodiment. As illustrated in FIG. 6, the method includes the following steps.

At step S601, a wake-up signal is monitored on a first wake-up signal resource on at least one wake-up signal monitoring occasion within a wake-up signal cycle, in which the first wake-up signal resource is a wake-up signal resource corresponding to a second group to which the UE belongs.

The wake-up signal cycle includes N wake-up signal monitoring occasions. The N wake-up signal monitoring occasions included in the wake-up signal cycle are in a one-to-one correspondence with N first groups, in which different first groups correspond to different UEs, and each of the first groups includes at least one UE. N is an integer greater than 1. One wake-up signal monitoring occasion corresponds to at least one wake-up signal resource, and different wake-up signal resources correspond to different second groups.

In some possible implementations, each second group is a subset of a first group having a one-to-one correspondence with the wake-up signal monitoring occasion, in which different second groups correspond to different UEs.

In some possible implementations, the wake-up signal cycle is configured via a broadcast signal sent by a base station; or,
the wake-up signal cycle is configured via a UE-specific signaling sent by a base station; or
the wake-up signal cycle is configured by a core network device.

In some possible implementations, N is specified by a protocol; or,
N is configured by a base station; or,
N is determined by at least one parameter configured by a base station.

In some possible implementations, the wake-up signal cycle includes M system frames. In an example, M may be 16, 32, 64, 128 or 256.

In some possible implementations, monitoring the wake-up signal on the at least one wake-up signal monitoring occasion within the wake-up signal cycle includes: monitoring the wake-up signal on at least one wake-up signal monitoring occasion corresponding to the UE within the wake-up signal cycle.

In some possible implementations, the wake-up signal cycle includes one wake-up signal monitoring occasion corresponding to the UE.

In some possible implementations, N is linearly related to a time domain length value corresponding to the wake-up signal cycle.

In some possible implementations, the N wake-up signal monitoring occasions included in the wake-up signal cycle are evenly distributed within the wake-up signal cycle. In a possible example, time domain locations of the N wake-up signal monitoring occasions specified by a protocol are obtained. In some possible implementations, the time domain locations of the N wake-up signal monitoring occasions included in the wake-up signal cycle are configured by a base station.

In some possible implementations, the time domain locations of the N wake-up signal monitoring occasions included in the wake-up signal cycle are configured by a base station.

In some possible implementations, the wake-up signal monitoring occasions are in a one-to-one correspondence with the first groups based on a first relation, in which the first relation is based on identifications of the UEs, a first rule configured by a core network device, or paging probabilities of the UEs.

In embodiments of the disclosure, the UE monitors the wake-up signal on the first wake-up signal resource in at least one wake-up signal monitoring occasion within the wake-up signal cycle, so as to reasonably allocate resources and reduce the energy consumption of the UE.

Embodiments of the disclosure provide a method for monitoring a wake-up signal, which is performed by a UE. The method may be executed independently or in combination with any other embodiment of the disclosure. FIG. 7 is a flowchart of a method for monitoring a wake-up signal according to an exemplary embodiment. As illustrated in FIG. 7, the method includes the following steps.

At step S701, a second group to which the UE belongs is determined based on an identification of the UE, a second rule configured by a core network device, or a paging probability of the UE.

The wake-up signal cycle includes N wake-up signal monitoring occasions. The N wake-up signal monitoring occasions within the wake-up signal cycle are in a one-to-one correspondence with N first groups, in which different first groups correspond to different UEs, and each of the first groups includes at least one UE. N is an integer greater than 1. One wake-up signal monitoring occasion includes at least one wake-up signal resource, and different wake-up signal resources correspond to different second groups.

At step S702, a wake-up signal is monitored based on a wake-up signal resource corresponding to the second group to which the UE belongs.

In some possible implementations, the wake-up signal cycle is configured via a broadcast signal sent by a base station; or,
the wake-up signal cycle is configured via a UE-specific signaling sent by a base station; or
the wake-up signal cycle is configured by a core network device.

In some possible implementations, the wake-up signal cycle includes M system frames. In an example, M may be 16, 32, 64, 128 or 256.

In some possible implementations, monitoring the wake-up signal on the at least one wake-up signal monitoring occasion within the wake-up signal cycle includes: monitoring the wake-up signal on at least one wake-up signal monitoring occasion corresponding to the UE within the wake-up signal cycle.

In some possible implementations, the wake-up signal cycle includes one wake-up signal monitoring occasion corresponding to the UE.

In some possible implementations, N is specified by a protocol; or,
N is configured by a base station; or,
N is determined by at least one parameter configured by a base station.

In some possible implementations, N is linearly related to a time domain length value corresponding to the wake-up signal cycle.

In some possible implementations, the N wake-up signal monitoring occasions included in the wake-up signal cycle are evenly distributed within the wake-up signal cycle. In a possible example, time domain locations of the N wake-up signal monitoring occasions specified by a protocol are obtained. In some possible implementations, the time domain locations of the N wake-up signal monitoring occasions included in the wake-up signal cycle are configured by a base station.

In some possible implementations, the time domain locations of the N wake-up signal monitoring occasions included in the wake-up signal cycle are configured by a base station.

In some possible implementations, the N wake-up signal monitoring occasions included in the wake-up signal cycle are in a one-to-one correspondence with N first groups, in which different first groups correspond to different UEs, and each of the first groups includes at least one UE.

In some possible implementations, the wake-up signal monitoring occasions are in a one-to-one correspondence with the first groups based on a first relation, in which the first relation is based on identifications of UEs, a first rule configured by a core network device, or paging probabilities of the UEs.

In some possible implementations, each second group is a subset of a first group having a one-to-one correspondence with the wake-up signal monitoring occasion, in which different second groups correspond to different UEs.

In embodiments of the disclosure, the UE monitors the wake-up signal on the wake-up signal resource of the wake-up signal monitoring occasion corresponding to the UE within the wake-up signal cycle, so that the UE can accurately receive the wake-up signal, saving the energy consumption.

Embodiments of the disclosure provide a method for monitoring a wake-up signal, which is performed by a UE. The method may be executed independently or in combination with any other embodiment of the disclosure. FIG. 8 is a flowchart of a method for monitoring a wake-up signal according to an exemplary embodiment. As illustrated in FIG. 8, the method includes the following steps.

At step S801, a wake-up signal is monitored on a first wake-up signal resource on at least one wake-up signal monitoring occasion within a wake-up signal cycle using a first wake-up signal parameter, in which the first wake-up signal resource is a wake-up signal resource corresponding to a second group to which the UE belongs, and the first wake-up signal parameter is a wake-up signal parameter corresponding to a third group to which the UE belongs.

The N wake-up signal monitoring occasions within the wake-up signal cycle are in a one-to-one correspondence with N first groups, in which different first groups correspond to different UEs, and each first group includes at least one UE. N is an integer greater than 1. One wake-up signal monitoring occasion includes at least one wake-up signal resource, and different wake-up signal resources correspond to different second groups. One wake-up signal resource corresponds to at least one wake-up signal parameter, different wake-up signaling parameters correspond to different third groups, and each third group is a subset of a second group having a one-to-one correspondence with the wake-up signal resource.

In some possible implementations, the wake-up signal parameter includes at least one of: a cyclic shift parameter of the wake-up signal, or an initialization parameter in an initialization scrambling sequence corresponding to the wake-up signal.

In some possible implementations, the wake-up signal parameter is the cyclic shift parameter of the wake-up signal.

In some possible implementations, the wake-up signal parameter is the initialization parameter in the initialization scrambling sequence corresponding to the wake-up signal.

In some possible implementations, the wake-up signal parameter includes: the cyclic shift parameter of the wake-up signal, and the initialization parameter in the initialization scrambling sequence corresponding to the wake-up signal.

In some possible implementations, the wake-up signal cycle is configured via a broadcast signal sent by a base station; or,
the wake-up signal cycle is configured via a UE-specific signaling sent by a base station; or
the wake-up signal cycle is configured by a core network device.

In some possible implementations, the wake-up signal cycle includes M system frames. In an example, M may be 16, 32, 64, 128 or 256.

In some possible implementations, monitoring the wake-up signal on the at least one wake-up signal monitoring occasion within the wake-up signal cycle includes: monitoring the wake-up signal on at least one wake-up signal monitoring occasion corresponding to the UE within the wake-up signal cycle.

In some possible implementations, the wake-up signal cycle includes one wake-up signal monitoring occasion corresponding to the UE.

In some possible implementations, N is specified by a protocol; or,
N is configured by a base station; or,
N is determined by at least one parameter configured by a base station.

In some possible implementations, N is linearly related to a time domain length value corresponding to the wake-up signal cycle.

In some possible implementations, the N wake-up signal monitoring occasions included in the wake-up signal cycle are evenly distributed within the wake-up signal cycle. In a possible example, time domain locations of the N wake-up signal monitoring occasions specified by a protocol are obtained. In some possible implementations, the time domain locations of the N wake-up signal monitoring occasions included in the wake-up signal cycle are configured by a base station.

In some possible implementations, the time domain locations of the N wake-up signal monitoring occasions included in the wake-up signal cycle are configured by a base station.

In some possible implementations, the wake-up signal monitoring occasions are in a one-to-one correspondence with the first groups based on a first relation, in which the first relation is based on identifications of UEs, or a first rule configured by a core network device, or paging probabilities of UEs.

In embodiments of the disclosure, the UE monitors the wake-up signal using the wake-up signal parameter corresponding to the UE within the wake-up signal cycle, so that the UE can accurately receive the wake-up signal, saving the energy consumption.

Embodiments of the disclosure provide a method for monitoring a wake-up signal, which is performed by a UE. The method may be executed independently or in combination with any other embodiment of the disclosure. FIG. 9 is a flowchart of a method for monitoring a wake-up signal according to an exemplary embodiment. As illustrated in FIG. 9, the method includes the following steps.

At step S901, at least one wake-up signal cycle recommended by the UE is reported to a base station.

At step S902, a wake-up signal is monitored on at least one wake-up signal monitoring occasion within the wake-up signal cycle.

In some possible implementations, at least one wake-up signal within the wake-up signal cycle is a part of the at least one wake-up signal cycle recommended by the UE.

In some possible implementations, time domain length of a recommended wake-up signal cycle is negatively correlated with an expected level of energy consumption. The magnitude of the time domain length of the wake-up signal cycle reflects the expected level of energy consumption of the UE. That is, the longer the time domain length of the wake-up signal cycle, the lower the level of energy consumption expected by the UE is, and the shorter the time domain length of the wake-up signal cycle, the higher the level of energy consumption expected by the UE is.

In a possible example, when the UE expects a lower level of energy consumption, the recommended wake-up signal cycle includes 128 system frames.

In a possible example, when the UE expects a higher level of energy consumption, the recommended wake-up signal cycle includes 16 system frames.

In some possible implementations, the wake-up signal cycle is configured via a broadcast signal sent by a base station; or,
the wake-up signal cycle is configured via a UE-specific signaling sent by a base station; or
the wake-up signal cycle is configured by a core network device.

In some possible implementations, the wake-up signal cycle includes N wake-up signal monitoring occasions, N is an integer greater than 1.

In some possible implementations, the wake-up signal cycle includes one wake-up signal monitoring occasion corresponding to the UE.

In some possible implementations, the time domain length of the recommended wake-up signal cycle is negatively correlated with the expected level of energy consumption.

In embodiments of the disclosure, the UE reports at least one wake-up signal cycle recommended by the UE to the base station and monitors the wake-up signal on the at least one wake-up signal monitoring occasion within the wake-up signal cycle, so that the UE can receive the wake-up signal accurately, saving the energy consumption.

Based on the same idea as the above method embodiments, embodiments of the disclosure also provide a communication device that may have functions of the UE 102 in the above method embodiments and can be used to perform the steps performed by the UE 102 in the above embodiments. The functions may be realized by hardware or software, or by hardware executing corresponding software. The hardware or software includes one or more modules corresponding to the above-described functions.

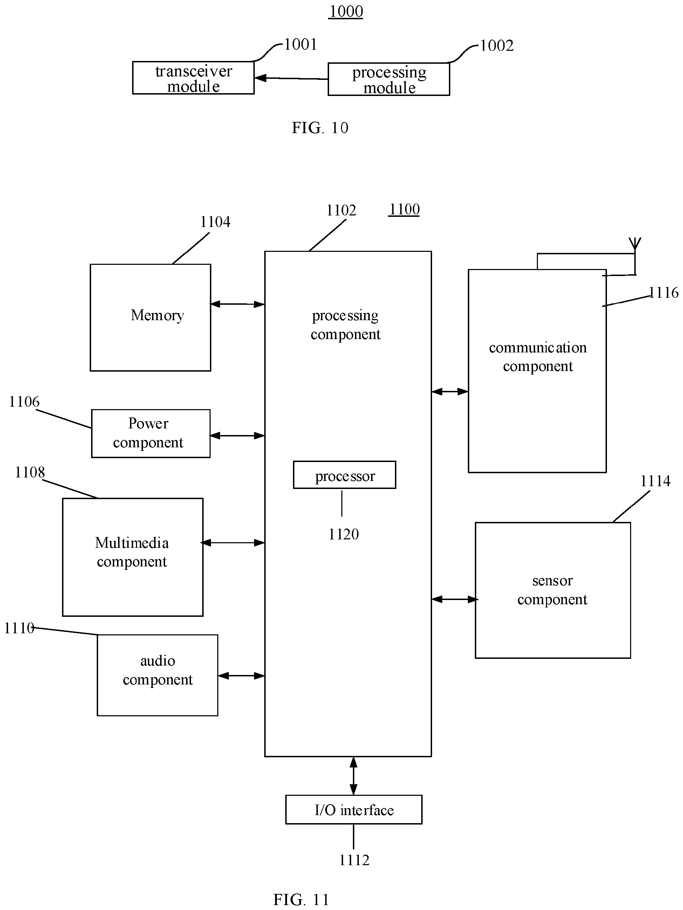

In a possible implementation, the communication device 1000 shown in FIG. 10 may act as the UE 102 involved in the above method embodiments and perform the steps performed by the UE 102 in any one of the above method embodiments.

The communication device 1000 includes a transceiver module 1001 and a processing module 1002.

The transceiver module 1001 is configured to monitor a wake-up signal on at least one wake-up signal monitoring occasion within a wake-up signal cycle.

In some possible implementations, the transceiver module 1001 is configured to monitor the wake-up signal on at least one wake-up signal monitoring occasion corresponding to the UE within the wake-up signal cycle.

In some possible implementations, the wake-up signal cycle includes one wake-up signal monitoring occasion corresponding to the UE.

In some possible implementations, the wake-up signal cycle is configured via a broadcast signal sent by a base station; or,
the wake-up signal cycle is configured via a user equipment-specific signaling sent by a base station; or
the wake-up signal cycle is configured by a core network device.

In some possible implementations, the wake-up signal cycle includes N wake-up signal monitoring occasions, and N is an integer greater than 1.

In some possible implementations, N is specified by a protocol; or,
N is configured by a base station; or,
N is determined by at least one parameter configured by a base station.

In some possible implementations, N is linearly related to a time domain length value corresponding to the wake-up signal cycle.

In some possible implementations, the N wake-up signal monitoring occasions included in the wake-up signal cycle are evenly distributed within the wake-up signal cycle. In a possible example, time domain locations of the N wake-up signal monitoring occasions specified by a protocol are obtained. In some possible implementations, the time domain locations of the N wake-up signal monitoring occasions included in the wake-up signal cycle are configured by a base station.

In some possible implementations, the time domain locations of the N wake-up signal monitoring occasions included in the wake-up signal cycle are configured by a base station.

In some possible implementations, the N wake-up signal monitoring occasions included in the wake-up signal cycle are in a one-to-one correspondence with N first groups, in which different first groups correspond to different UEs, and each of the first groups includes at least one UE. The transceiver module 1001 is further used to monitor the wake-up signal on a wake-up signal monitoring occasion corresponding to a first group to which the UE belongs within the wake-up signal cycle.

In some possible implementations, the wake-up signal monitoring occasions are in a one-to-one correspondence with the first groups based on a first relation, in which the first relation is based on identifications of the UEs, or a first rule configured by a core network device, or paging probabilities of the UEs.

In some possible implementations, one wake-up signal monitoring occasion includes at least one wake-up signal resource, and different wake-up signal resources correspond to different second groups. The transceiver module 1001 is further used to monitor a wake-up signal on a first wake-up signal resource on the at least one wake-up signal monitoring occasion within the wake-up signal cycle, in which the first wake-up signal resource is a wake-up signal resource corresponding to a second group to which the UE belongs.

In some possible implementations, each second group is a subset of a first group having a one-to-one correspondence with the wake-up signal monitoring occasion, in which different second groups correspond to different UEs.

In some possible implementations, the processing module 1002 is used to determine a second group to which the UE belongs based on an identification of the UE, a second rule configured by a core network device, or a paging probability of the UE.

In some possible implementations, one wake-up signal resource corresponds to at least one wake-up signal parameter, and different wake-up signal parameters correspond to different third groups. Each third group is a subset of a second group having a one-to-one correspondence with the wake-up signal resource. The transceiver module 1001 is further configured to monitor the wake-up signal on a first wake-up signal resource on the at least one wake-up signal monitoring occasion within the wake-up signal cycle using a first wake-up signal parameter, in which the first wake-up signal resource is the wake-up signal resource corresponding to the second group to which the UE belongs, and the first wake-up signal parameter is a wake-up signal parameter corresponding to a third group to which the UE belongs.

In some possible implementations, the transceiver module 1001 is further used to report at least one wake-up signal cycle recommended by the UE to a base station.

When the communication device is a UE, its structure may also be illustrated in FIG. 11. FIG. 11 is a structural diagram of a device 1100 for monitoring a wake-up signal according to an exemplary embodiment. For example, the device 1100 may be a mobile phone, a computer, a digital broadcasting terminal, a message transceiver device, a game console, a tablet device, a medical device, a fitness device and a personal digital assistant, etc.

As illustrated in FIG. 11, the device 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the device 1100, such as the operations associated with display, telephone calls, data communication, camera operations, and recording operations. The processing component 1102 may include one or more processors 1120 to perform instructions to implement all or part of the steps in the above described method. Moreover, the processing component 1102 may include one or more modules which facilitate the interaction between the processing component 1102 and other components. For example, the processing component 1102 may include a multimedia module to facilitate the interaction between the multimedia component 1108 and the processing component 1102.

The memory 1104 is configured to store various types of data to support the operation of the device 1100. Examples of such data include instructions for any applications or methods operated on the device 1100, contact data, phonebook data, messages, pictures, videos, etc. The memory 1104 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read-Only Memory (PROM), a Read Only Memory (ROM), a magnetic memory, a flash memory, a magnetic or optical disk.

The power component 1106 provides power to various components of the device 1100. The power component 1106 may include a power management system, one or more power sources, and any other components associated with the generation, management, and distribution of power in the device 1100.

The multimedia component 1108 includes a screen providing an output interface between the device 1100 and a user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front-facing camera and/or a rear-facing camera. When the device 1100 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1110 is configured to output and/or input audio signals. For example, the audio component 1110 includes a microphone (MIC) configured to receive an external audio signal when the device 1100 is in an operation mode, such as a calling mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the device 1100. For instance, the sensor component 1114 may detect an open/closed status of the device 1100, relative positioning of components, e.g., the display and the keypad, of the device 1100, a change in position of the device 1100 or a component of the device 1100, a presence or absence of a user contact with the device 1100, an orientation or an acceleration/deceleration of the device 1100, and a change in temperature of the device 1100. The sensor component 1114 may include a proximity sensor configured to detect the presence of nearby objects without any physical contact. The sensor component 1114 may also include a light sensor, such as a Complementary Metal Oxide Semiconductor (CMOS) or Charge-Coupled Device (CCD) image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the device 1100 and other devices. The device 1100 can access a wireless network based on a communication standard, such as WiFi^{™}, 4G, or 5G, or a combination thereof. In an exemplary embodiment, the communication component 1116 receives a broadcast signal from an external broadcast management system via a broadcast channel or broadcast associated information. In an exemplary embodiment, the communication component 1116 further includes a Near Field Communication (NFC) module to facilitate short-range communication. For example, the NFC module may be implemented based on a radio-frequency identification (RFID) technology, an Infrared Data Association (IrDA) technology, an Ultra-Wide Band (UWB) technology, a Blue Tooth (BT) technology, and other technologies.

In an exemplary embodiment, the device 1100 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

In an exemplary embodiment, there is also provided a non-transitory computer readable storage medium including instructions, such as the memory 1104, executable by the processor 1120 in the device 1100, for implementing the above method. For example, the non-transitory computer-readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

### INDUSTRIAL PRACTICALITY

The UE monitors the wake-up signal on the at least one wake-up signal monitoring occasion within the wake-up signal cycle, so that the UE can accurately receive the wake-up signal, saving the energy consumption.

## Claims

1. A method for monitoring a wake-up signal, performed by a user equipment, comprising:
monitoring a wake-up signal on at least one wake-up signal monitoring occasion within a wake-up signal cycle.

2. The method of claim 1, wherein monitoring the wake-up signal on the at least one wake-up signal monitoring occasion within the wake-up signal cycle comprises:
monitoring the wake-up signal on at least one wake-up signal monitoring occasion corresponding to the user equipment within the wake-up signal cycle.

3. The method of claim 1 or 2, wherein the wake-up signal cycle comprises one wake-up signal monitoring occasion corresponding to the user equipment.

4. The method of claim 1, wherein
the wake-up signal cycle is configured via a broadcast signal sent by a base station; or,
the wake-up signal cycle is configured via a user equipment-specific signaling sent by a base station; or
the wake-up signal cycle is configured by a core network device.

5. The method of claim 1, wherein the wake-up signal cycle comprises N wake-up signal monitoring occasions, and N is an integer greater than 1.

6. The method of claim 5, wherein
N is specified by a protocol; or,
N is configured by a base station; or,
N is determined by at least one parameter configured by a base station.

7. The method of claim 5, wherein
N is linearly related to a time domain length value corresponding to the wake-up signal cycle.

8. The method of claim 5, wherein
the N wake-up signal monitoring occasions comprised in the wake-up signal cycle are evenly distributed within the wake-up signal cycle.

9. The method of claim 5, wherein
time domain locations of the N wake-up signal monitoring occasions comprised in the wake-up signal cycle are configured by a base station.

10. The method of any one of claims of 5 -9, wherein
the N wake-up signal monitoring occasions comprised in the wake-up signal cycle are in a one-to-one correspondence with N first groups, wherein different first groups correspond to different user equipments, and each of the first groups comprises at least one user equipment; and
monitoring the wake-up signal on the at least one wake-up signal monitoring occasion within the wake-up signal cycle comprises:
monitoring the wake-up signal on a wake-up signal monitoring occasion corresponding to a first group to which the user equipment belongs within the wake-up signal cycle.

11. The method of claim 10, wherein
the wake-up signal monitoring occasions are in a one-to-one correspondence with the first groups based on a first relation, wherein the first relation is based on identifications of the user equipments, a first rule configured by a core network device, or paging probabilities of the user equipments.

12. The method of any one of claims of 10-11, wherein
the method further comprises:
one wake-up signal monitoring occasion corresponds to at least one wake-up signal resource, and different wake-up signal resources correspond to different second groups; and
monitoring the wake-up signal on the at least one wake-up signal monitoring occasion within the wake-up signal cycle comprises:
monitoring the wake-up signal on a first wake-up signal resource on the at least one wake-up signal monitoring occasion within the wake-up signal cycle, wherein the first wake-up signal resource is a wake-up signal resource corresponding to a second group to which the user equipment belongs.

13. The method of claim 12, wherein
each second group is a subset of a first group having a one-to-one correspondence with the wake-up signal monitoring occasion, wherein different second groups correspond to different user equipments.

14. The method of claim 12, further comprising:
determining a second group to which the user equipment belongs based on an identification of the user equipment, a second rule configured by a core network device, or a paging probability of the user equipment.

15. The method of claim 12, further comprising:
one wake-up signal resource corresponds to at least one wake-up signal parameter, different wake-up signal parameters correspond to different third groups, and each third group is a subset of a second group having a one-to-one correspondence with the wake-up signal resource;
wherein monitoring the wake-up signal on the at least one wake-up signal monitoring occasion within the wake-up signal cycle comprises:
monitoring the wake-up signal on a first wake-up signal resource on the at least one wake-up signal monitoring occasion within the wake-up signal cycle using a first wake-up signal parameter, wherein the first wake-up signal resource is the wake-up signal resource corresponding to the second group to which the user equipment belongs, and the first wake-up signal parameter is a wake-up signal parameter corresponding to a third group to which the user equipment belongs.

16. The method of claim 15, wherein the wake-up signal parameter comprises at least one of:
a cyclic shift parameter of the wake-up signal, or an initialization parameter in an initialization scrambling sequence corresponding to the wake-up signal.

17. The method of claim 1, further comprising:
reporting at least one wake-up signal cycle recommended by the user equipment to a base station.

18. An apparatus for monitoring a wake-up signal, provided in a user equipment, comprising:
a transceiver module, configured to monitor a wake-up signal on at least one wake-up signal monitoring occasion within a wake-up signal cycle.

19. A communication device, comprising a processor and a memory, wherein
the memory is configured to store a computer program; and
the processor is configured to execute the computer program to implement the method of any one of claims 1-17.

20. A computer-readable storage medium having instructions stored thereon that, when called and executed by a computer, cause the computer to perform the method of any one of claims 1-17.
